# FASCICULE DE BREVET EUROPEEN

(11) **EP 2 625 224 B1**
(45) Date de publication et mention de la délivrance du brevet: **10.04.2019**
(21) Numéro de dépôt: 11767409.3
(22) Date de dépôt: 28.09.2011
(51) Int. Cl.: C08L 77/00, C08L 77/06, C08K 5/053, C08K 7/14, C08L 51/06, C08K 3/16

(54) **COMPOSITION POLYAMIDE THERMO-STABILISEE**
WÄRMESTABILISIERTE POLYAMIDZUSAMMENSETZUNG
HEAT-STABILIZED POLYAMIDE COMPOSITION

(30) Priorité: 05.10.2010 FR 1058036
(43) Date de publication de la demande: 14.08.2013
(73) Titulaire: Rhodia Operations, 93306 Aubervilliers (FR)
(72) Inventeur: JEOL, Stéphane, Cumming, Georgia 30041 (US); BADEL, Thierry, 69008 Lyon (FR); KIM, Hae-Young, Mapo-gu, Seoul 03943 (KR); SPERONI, Franco, 20020 Ceriano Laghetto (MI) (IT)
(74) Mandataire: Schuck, Alexander
(86) Numéro de dépôt international: PCT/EP2011/066909
(87) Numéro de publication internationale: WO 2012/045636

(56) Documents cités:
- WO-A1-2010/014790
- WO-A1-2010/014801
- WO-A2-2011/014548

## Description

L'invention concerne une composition polyamide stabilisée vis-à-vis de la chaleur comprenant un système de stabilisation à base d'un alcool polyhydrique, présentant un excellent maintien des propriétés mécaniques après une exposition à la chaleur. L'invention concerne aussi un procédé de fabrication de ces compositions et notamment l'utilisation de ces compositions pour la réalisation de différents articles.

Le polyamide est un polymère synthétique largement utilisé pour la fabrication de divers articles, tels que des pièces moulées et/ou injectées. Le polyamide peut subir des dégradations lorsqu'il est soumis à des éléments ou conditions externes tels que les rayons UV, la chaleur, et/ou les intempéries. Des dégradations peuvent également être induites par la chaleur utilisée au cours de sa fabrication et/ou de sa mise en forme. Cette instabilité se traduit par des dégradations, des pertes de propriétés mécaniques, et des changements de couleur. Ces problèmes peuvent devenir critiques pour un certain nombre d'applications, tels que notamment des pièces dans le domaine de l'automobile qui sont notamment soumises à des chaleurs importantes.

Pour améliorer la stabilité vis-à-vis de la chaleur des polyamides, il est connu de leur associer des agents stabilisants particuliers. De nombreux additifs sont commercialisés à cet effet. On connait par exemple l'utilisation de l'iodure de cuivre, notamment en association avec d'iodure de potassium qui est dans la plupart des cas utilisé et qui fournit de bonnes propriétés de stabilisation. Il est également connu d'utiliser des additifs plus complexes tels que composés antioxydants phénoliques encombrés, des stabilisants présentant au moins un motif amine encombrée de type HALS ou des stabilisants phosphorés.

WO 2010/014790 A1 décrit des articles thermoplastiques résistant à la chaleur, ledit articles comprenant : a) une résine polyamide, b) 0.1 à 10 % en poids d'un alcohol polyhydrique, c) 0 à 3 % en poids de co-stabilisant choisi parmi les arylamines secondaires, les HALS et leurs mélanges, d) 0 à 10 % d'agent de renfort, e) 0 à 50 % de renforceur polymérique.

WO 2010/014801 A1 décrit des articles thermoplastiques moulés ou extrudés comprenant une composition thermoplastique comprenant : a) une résine thermoplastique pouvant être polyamide, polyester ou un mélange, b) 0.25 à 15 % en poids d'un alcool polyhydrique, c) 0 à 3 en poids de co-stabilisant choisi parmi les arylamines secondaires, les HALS et leurs mélanges, d) 10 à 60 % d'agent de renfort, e) 0 à 50 % de renforceur polymérique.

WO 2010/014790 A1 et WO 2010/014801 A1 décrivent un mode de réalisation particulier dans lequel les articles thermoplastiques moulés ou extrudés comprennent de 2 à 20 % en poids de renforceur polymérique.

Toutefois, il existe un besoin d'obtenir des compositions polyamides encore plus performantes au niveau de la stabilisation vis-à-vis de la chaleur, et à moindre cout.

La demanderesse a mis au point une nouvelle composition polyamide permettant d'obtenir un excellent maintien des propriétés mécaniques après une longue exposition à la chaleur.

La présente invention concerne ainsi l'utilisation d'un agent modificateur du choc pour accroitre la résistance thermo oxydante d'une composition polyamide comprenant un alcool polyhydrique comportant de 2 à 8 groupements hydroxyles.

La présente invention concerne aussi une composition comprenant au moins:
- une résine polyamide thermoplastique ;
- de 3-10 % en poids d'agents de modificateur du choc ;
- un système de stabilisation thermique constitué uniquement d'un alcool polyhydrique choisi dans le groupe constitué par : les diols, tels que le 1,5-pentanediol, le 2,2-diméthyl-1,3 propanediol, le triéthylène glycol, les polyéther de glycol, les triols, comme le glycerol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le 1,1,1-tris-(4'-hydroxyphenyl)-ethane, le 1,1,1-tris-(hydroxyphenyl)-propane, le 1,1,3-tris-(dihydroxy-3-methylphenyl)-propane, le 1,1,4-tris-(dihydroxyphenyl)-butane, le 1,1,5-tris-(hydroxyphenyl)-3-methylpentane, le di-trimethylopropane, l'ethoxylate de trimethylolpropane, ou le propoxylate de trimethylolpropane ; les polyols tels que le pentaerythritol, le dipentaerythritol, et le tripentaerythritol; et les saccharides tels que la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-y-lactone ;

- une charge de renfort ou de remplissage ; et
- un additif choisi dans le groupe constitué par : les lubrifiants, les agents ignifugeants, les plastifiants, les agents nucléants, les catalyseurs, les antioxydants, les antistatiques, les colorants, les matifiants, les additifs d'aide au moulage.

La proportion en poids est exprimée par rapport au poids total de la composition.

Le polyamide de l'invention est notamment choisi dans le groupe comprenant les polyamides obtenus par polycondensation d'au moins un diacide carboxylique aliphatique avec une diamine aliphatique ou cyclique ou cycloaliphatique ou arylaliphatique comme le PA 6.6, PA 6.10, PA 6.12, PA 10.10, PA 10.6, PA 12.12, PA 4.6, MXD 6, PA 92 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'aminoacide pouvant être généré par l'ouverture hydrolytique d'un cycle lactame tels que, par exemple PA 6, PA 7, PA 11, PA 12, PA 13 ou leur mélange et (co)polyamides. Comme type de copolyamide on peut notamment citer le polyamide 6/66.

On préfère notamment les polyamides semi-cristallins aliphatiques ou semi-aromatiques.

On préfère particulièrement les polyamides de type 6 et les polyamide de type 66. On entend notamment par polyamide de type 6 un polyamide comprenant au moins 90 % en poids de résidus de monomères caprolactame ou aminocaproïque. On entend notamment par polyamide de type 66 un polyamide comprenant au moins 90 % en poids de résidus de monomères acide adipique et hexaméthylènediamine.

Les polyamides peuvent présenter une viscosité apparente en phase fondue comprise entre 10 et 1200 Pa.s, mesuré selon la norme ISO 11443 à un taux de cisaillement de 1000 s⁻¹ et une température de 250°C, notamment pour les polyamide de type 6 ; ou une viscosité apparente en phase fondue comprise entre 10 et 700 Pa.s, mesuré selon la norme ISO 11443 à un taux de cisaillement de 1000 s⁻¹ et une température de 280°C, notamment pour les polyamide de type 66.

On peut notamment utiliser des polyamides de poids moléculaires variables par addition avant ou pendant la polymérisation des monomères de polyamide, ou encore en voie fondue à l'extrusion, de monomères modifiant la longueur des chaînes, tel que notamment des composés difonctionnels et/ou monofonctionnels présentent des fonctions amines ou acides carboxyliques capables de réagir avec les monomères du polyamide ou le polyamide.

Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques.

On peut utiliser tout particulièrement un polyamide obtenu au moins à partir d'acide adipique et d'hexaméthylène diamine ou de leurs sels tels que l'adipate d'hexaméthylènediamine, pouvant éventuellement comprendre diverses proportions d'autres monomères de polyamide. On peut citer à cet effet le polyamide 66/6T.

Des polyamides selon l'invention peuvent aussi être obtenus par mélange, notamment en fondu. On peut par exemple mélanger un polyamide avec un autre polyamide, ou un polyamide avec un oligomère de polyamide, ou encore un polyamide avec des monomères modifiant la longueur des chaînes, tel que notamment des diamines, diacides carboxyliques, monoamines et/ou monoacides carboxyliques. On peut notamment ajouter au polyamide de l'acide isophtalique, de l'acide téréphtalique ou de l'acide benzoïque, par exemple à des teneurs d'environ 0,2 à 2 % en poids.

La composition de l'invention peut également comprendre les copolyamides dérivés notamment des polyamides ci-dessus, ou les mélanges de ces polyamides ou (co)polyamides.

On peut également utiliser des polyamides branchés de haute fluidité notamment obtenus par mélange en polymérisation, en présence des monomères de polyamide, d'au moins un composé multifonctionnel comprenant au moins 3 fonctions réactives identiques de type fonction amine ou fonction acide carboxylique.

On peut également utiliser comme polyamide de haute fluidité un polyamide étoile comprenant des chaînes macromoléculaires étoiles et le cas échéant des chaînes macromoléculaires linéaires. Les polymères comprenant de telles chaînes macromoléculaires étoiles sont par exemple décrits dans les documents WO97/24388 et WO99/64496.

Ces polyamides étoiles sont notamment obtenus par mélange en polymérisation, en présence des monomères de polyamide, un aminoacide ou lactame tel que le caprolactame, d'au moins un composé multifonctionnel comprenant au moins 3 fonctions réactives identiques de type fonction amine ou fonction acide carboxylique. Par acide carboxylique, on entend les acides carboxyliques et leurs dérivés, tels que les anhydrides d'acide, les chlorures d'acide et les esters, par exemple. Par amine, on entend les amines et leurs dérivés capables de former une liaison amide.

La composition peut comprendre, outre le polyamide modifié de l'invention, un ou plusieurs autres polymères, de préférence polyamides ou copolyamides.

La composition selon l'invention peut comprendre entre 20 et 80 % en poids, préférentiellement entre 20 et 70 % en poids, et plus préférentiellement entre 35 et 65% en poids de polyamide, par rapport au poids total de la composition.

Les charges de renfort ou de remplissage sont des charges classiquement utilisées pour la réalisation de compositions polyamides. On peut notamment citer les charges fibreuses de renfort, telles que telles que des fibres de verre, des fibres de carbone, ou des fibres organiques, les charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

On préfère notamment utiliser les fibres de renfort, telles que les fibres de verre. De façon préférentielle, la fibre la plus utilisé est la fibre de verre, de type dit coupé (chopped), ayant un diamètre compris entre 7 et 14 µm et une longueur inférieure à 5 mm. Ces charges peuvent présenter un ensimage surfacique qui assure l'adhésion mécanique entre les fibres et la matrice polyamide.

La composition selon l'invention peut comprendre entre 5 et 60 % en poids de charges de renfort ou de remplissage, préférentiellement entre 10 et 40 % en poids, par rapport au poids total de la composition.

La composition de l'invention comprend ainsi de 3 à 10 % en poids d'agents de modificateur du choc, par rapport au poids total de la composition. On entend ainsi une composition qui ne peut comprendre que de 3 à 10 % en poids d'agents de modificateur du choc. Autrement, dit la proportion totale d'agents modificateur du choc, notamment du système des agents modificateurs du choc de la composition, ne peut être compris qu'entre 3 et 10 % en poids dans la composition totale.

La composition selon l'invention comprenant le polyamide tel que défini précédemment comprend au moins un agent modificateur du choc, c'est-à-dire un composé capable de modifier la résistance aux chocs d'une composition polyamide. Ces composés modificateurs du choc comprennent préférentiellement des groupements fonctionnels réactifs avec le polyamide.

On entend selon l'invention par groupements fonctionnels réactifs avec le polyamide, des groupements capables de réagir ou d'interagir chimiquement avec les fonctions acides ou amines du polyamide, notamment par covalence, interaction ionique ou hydrogène ou liaison de van der Walls. De tels groupements réactifs permettent d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

On utilise préférentiellement des agents modificateurs du choc comprenant des groupements fonctionnels réactifs avec le polyamide en fonction de la nature acide ou amine du déséquilibre ΔGT=GTC-GTA (concentration en groupements terminaux acide GTC moins concentration en groupements terminaux amine GTA) du polyamide. Ainsi par exemple, si le ΔGT est « acide » (GTC>GTA) on utilisera préférentiellement des groupements fonctionnels réactifs capables de réagir ou d'interagir chimiquement avec les fonctions acides du polyamide, notamment par covalence, interaction ionique ou hydrogène ou liaison de van der Walls. Si par exemple, le ΔGT est « aminé » (GTA>GTC) on utilisera préférentiellement des groupements fonctionnels réactifs capables de réagir ou d'interagir chimiquement avec les fonctions amines du polyamide, notamment par covalence, interaction ionique ou hydrogène ou liaison de van der Walls. On utilise préférentiellement des agents modificateurs du choc ayant des groupements fonctionnels réactifs avec le polyamide présentant un ΔGT de nature « amine ».

Les agents modificateurs du choc peuvent très bien comprendre en eux-mêmes des groupements fonctionnels réactifs avec le polyamide, par exemple pour ce qui concerne l'éthylènes acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser selon l'invention, les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidyle méthacrylate. Ces composés selon l'invention peuvent également comprendre en plus d'autres monomères que ceux mentionnés précédemment.

La base du composé modificateur du choc, éventuellement appelé base élastomérique, peut être choisie dans le groupe comprenant : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

En plus des groupements listés ci-dessus, ces agent modificateurs de chocs peuvent comprendre également, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyles notamment époxy, les esters glycidyles glycidyle , les anhydrides notamment les anhydrides maléiques, les oxazolines, les maléïmides, ou leurs mélanges.

Des tels groupements fonctionnels sur les élastomères sont par exemple obtenus par utilisation d'un co-monomère lors de la préparation de l'élastomère.

Comme agents modificateurs de chocs comprenant des groupements fonctionnels réactifs avec le polyamide, on peut notamment citer les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères éthylène-propylène-diène greffé par de l'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

La proportion en poids des agents modificateur du choc dans la composition totale est notamment comprise entre 3 et 10 %, préférentiellement entre 4 et 8 %, par rapport au poids total de la composition, notamment 4, 4,5, 5, 5,5, 6, 6,5, 7, 7,5 et 8 et les valeurs comprises entre ces intervalles.

La composition selon l'invention comprend un système de stabilisation thermique constitué uniquement d'un alcool polyhydrique comportant de 2 à 8 groupements hydroxyles énoncé ci-dessus ; c'est-à-dire notamment sans avoir recours à d'autres agents stabilisants à la chaleur, tels que le couple CuI et KI, les composés phénoliques encombrés, des stabilisants présentant au moins un motif amine encombrée de type HALS, ou des stabilisants phosphorés organiques ou inorganiques, tel que de l'hypophosphite de sodium ou de manganèse.

L'alcool polyhydrique présente préférentiellement de 3 à 8 groupements hydroxyles.

Les alcools polyhydriques préférés incluent ceux possédant au moins une paire de groupements hydroxyles dont les atomes de carbone auxquels ils sont respectivement liés sont séparés par au moins un atome, préférentiellement un atome de carbone ou d'oxygène.

Préférentiellement l'alcool polyhydrique utilisé dans la composition thermoplastique est le diglycérol, le triglycérol, le pentaérythritol, le dipentaérythritol, le tripentaérythritol, et le di-trimethylolpropane. Plus préférentiellement l'alcool polyhydrique utilisé est le dipentaérythritol et ou le tripentaérythritol.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les catalyseurs, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

Préférentiellement, la composition de l'invention est constitué de :
- une résine polyamide thermoplastique ;
- de 3-10 % en poids d'agents de modificateur du choc ; et
- un alcool polyhydrique comportant de 2 à 8 groupements hydroxyles énoncé ci-dessus ;
- une charge de renfort ou de remplissage ; et
- un additif choisit dans le groupe constitué par : les lubrifiants, les agents ignifugeants, les plastifiants, les agents nucléants, les catalyseurs, les antioxydants, les antistatiques, les colorants, les matifiants, les additifs d'aide au moulage.

Les compositions polyamides sont généralement obtenues par mélange des différents composés entrant dans la composition à froid ou en fondu. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage.

La présente invention concerne également des articles obtenus par mise en forme de la composition selon l'invention, par exemple par extrusion, moulage, ou moulage par injection. On peut citer comme article ceux utilisés dans le domaine de l'automobile.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Caractérisations

Teneurs en groupements terminaux acide (GTC) et amine (GTA) : dosées par potentiométrie, exprimées en meq/kg. Teneur en groupement bloqueur de chaîne (GTB) calculée à partir des quantités initiales de réactifs. Par exemple, l'acide benzoïque ou l'acide acétique peuvent être utilisés comme bloqueurs de chaîne.

Masse molaire moyenne en nombre Mn déterminée par la formule Mn=2.10⁶/(GTA+GTC+GTB) et exprimée en g/mol.

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

Température de transition vitreuse (T_{g}) déterminée sur le même appareil à une vitesse de 40 °C/min.

### Préparation d'un copolyamide PA 66/6T 65/35 mol/mol

Dans un réacteur de polymérisation sont introduits 58,34 kg (222,4 mol) de sel N (sel 1:1 d'hexaméthylène diamine et d'acide adipique), 19,9 kg (119,8 mol) d'acide téréphtalique, 44,06 kg (122,6 mol) d'une solution aqueuse d'hexaméthylène diamine à 32,34% en poids, 340,5 g (5,67 mol) d'acide acétique à 100%, 56 kg d'eau déminéralisée et 6,4 g d'agent antimousse Silcolapse 5020®. Le copolyamide 66/6T 65/35 est fabriqué selon un procédé standard de polymérisation de type polyamide 66, avec 15 minutes de finition à 290°C. Le polymère obtenu est coulé sous forme de jonc, refroidi et mis sous forme de granulé par coupe des joncs.

Le polymère obtenu présente les caractéristiques suivantes : GTC = 71,4 meq/kg, GTA = 51,4 meq/kg, et GTB= 71 meq/kg soit Mn = 10 300 g/mol. Le polyamide 66/6T 65/35 est semi-cristallin et a les caractéristiques thermiques suivantes : Tg= 81,9°C, Tc= 248,1 °C, Tf= 281,9 °C.

### Extrusions

Avant extrusion, les granulés de polyamide sont séchés à une teneur en eau inférieure à 1000 ppm. Des formulations sont réalisées par mélange des différents composants et additifs en voie fondu dans une extrudeuse bi-vis co-rotative WERNER&PLEIFEDER ZSK 40 fonctionnant à 40 kg/h et à une vitesse de 270 trs/min. Les températures de consigne des 8 zones sont respectivement : 250, 255, 260, 260, 265, 270, 275, 280 °C. Tous les composants de la formulation sont introduits au début de l'extrudeuse. Le jonc sorti d'extrudeuse est refroidi dans un bac d'eau, coupé sous la forme de granulés à l'aide d'un granulateur et conditionnés dans un sac thermo-sellé. Avant d'être injectés, les granulés sont séchés de sorte à obtenir un taux d'humidité inférieur à 1000 ppm.

Les additifs utilisés sont les suivants :
- Dipentaerythritol (technical grade) de Sigma Aldrich, nommé DPE
- CuI et KI de AJAY Europe
- Fibres de verre OCV 983 de Owens Corning Vetrotex (35 % en poids)
- Elastomère d'ExxonMobil Chemical de référence EXXELOR VA1803, copolymère amorphe à base d'éthylène et greffé par de l'anhydride maléique (0,5 à 1% en poids)
- Pigment noir de carbone et nigrosine en masterbatch (0,7 % en poids)

### Test de vieillissement thermique

Les formulations réalisées sont injectées, sur une presse DEMAG 50T à 280°C avec une température de moule de 80°C, sous la forme d'éprouvettes multifonctions d'épaisseur 4 mm pour caractériser les propriétés mécaniques en traction (module en traction, contrainte à la rupture, déformation à la rupture - moyenne obtenue sur 5 échantillons) selon la norme ISO 527/1A et en impact (Charpy non entaillé - moyenne obtenue sur 10 échantillons) selon la norme ISO 179-1/1eU à 23°C avant et après vieillissement thermique sous air.

Le vieillissement thermique ventilé sous air est effectué en plaçant les éprouvettes dans une étuve Heraeus TK62120 régulée à 240°C. A différents temps de vieillissement, des éprouvettes sont sorties de l'étuve, refroidies à température ambiante et placées dans des sacs thermo-sellés pour éviter qu'elles ne reprennent d'humidité avant évaluation de leurs propriétés mécaniques.

On définit alors la rétention de contrainte à la rupture ou de résistance à l'impact à un temps de vieillissement donné par le rapport à ces mêmes propriétés avant vieillissement. On définit ainsi la rétention en pourcentage

Les formulations ainsi que les propriétés sont regroupées dans le tableau 1 suivant :

**Tableau 1**

| | **C1** | **C2** | **C3** | **1** |
|---|---|---|---|---|
| PA 66/6T (%) | 63,15 | 59,15 | 62,3 | 58,3 |
| DPE (%) | - | - | 2 | 2 |
| CuI / KI (%) | 0,15/1 | 0,15/1 | - | - |
| Elastomère Exxelor VA1803 (%) | - | 4 | - | 4 |

| **Avant vieillissement** | | | | |
|---|---|---|---|---|
| Module en traction (MPa) | 11620 | 11160 | 11770 | 11420 |
| Contrainte en traction à la rupture (MPa) | 198,8 | 187,7 | 197,6 | 184 |
| Déformation à la rupture (%) | 2,6 | 2,6 | 3,5 | 3,4 |
| Impact Charpy entaillé (kJ/m2) | 65 | 81,0 | 80 | 91 |

| **Après vieillissement 168h@ 240°C** | | | | |
|---|---|---|---|---|
| Rétention de la contrainte en traction à la rupture (%) | 76 | 84 | 105 | 103 |
| Rétention du Choc Charpy entaillé (%) | 46 | 51 | 83 | 97 |

| **Après vieillissement 336h@ 240°C** | | | | |
|---|---|---|---|---|
| Rétention de la contrainte en traction à la rupture (%) | N.M. | N.M. | 99 | 99 |
| Rétention du Choc Charpy entaillé (%) | N.M. | N.M. | 65 | 77 |

| **Après vieillissement 504h@ 240°C** | | | | |
|---|---|---|---|---|
| Rétention de la contrainte en traction à la rupture (%) | 64 | 72 | 80 | 89 |
| Rétention du Choc Charpy entaillé (%) | 51 | 46 | 46 | 62 |

| | | | | |
|---|---|---|---|---|
| N.M. : non mesuré | | | | |

On observe ainsi clairement que la présence de l'élastomère permet d'améliorer la résistance à l'impact avant vieillissement dans les formulations quelle que soit la nature du stabilisant thermique utilisé, le mélange CuI/KI ou le DPE. Il s'agit de l'effet recherché. En revanche, nous observons de manière tout à fait surprenante que l'utilisation d'élastomère en complément du DPE engendre une rétention des propriétés mécaniques à la fois en traction et en impact plus importante que sans élastomère. Ceci n'est pas vérifié expérimentalement avec un autre type de stabilisant thermique comme les mélanges CuI/KI. Il y a donc un effet synergique à l'utilisation de mélanges d'alcool polyhydrique et d'élastomère sur la rétention des propriétés mécaniques en traction et en impact après vieillissement thermique sous air.

## Revendications

1. Composition comprenant au moins:
- une résine polyamide thermoplastique ;
- de 3-10 % en poids, par rapport au poids total de la composition, d'agents de modificateur du choc ;
- un système de stabilisation thermique constitué uniquement d'un alcool polyhydrique choisi dans le groupe constitué par : les diols, tels que le 1,5-pentanediol, le 2,2-diméthyl-1,3 propanediol, le triéthylène glycol, les polyéther de glycol, les triols, comme le glycerol, le trimethylolpropane, le 2,3-di-(2'-hydroxyethyl)-cyclohexan-1-ol, l'hexane-1,2,6-triol, le 1,1,1-tris-(hydroxymethyl)ethane, le 3-(2'-hydroxyethoxy)-propane-1,2-diol, le 3-(2'-hydroxypropoxy)-propane-1,2-diol, le 2-(2'-hydroxyethoxy)-hexane-1,2-diol, le 6-(2'-hydroxypropoxy)-hexane-1,2-diol, le 1,1,1-tris-[(2'-hydroxyethoxy)-methyl]-ethane, le 1,1,1-tris-[(2'-hydroxypropoxy)-methyl]-propane, le 1,1,1-tris-(4'-hydroxyphenyl)-ethane, le 1,1,1-tris-(hydroxyphenyl)-propane, le 1,1,3-tris-(dihydroxy-3-methylphenyl)-propane, le 1,1,4-tris-(dihydroxyphenyl)-butane, le 1,1,5-tris-(hydroxyphenyl)-3-methylpentane, le di-trimethylopropane, l'ethoxylate de trimethylolpropane, ou le propoxylate de trimethylolpropane ; les polyols tels que le pentaerythritol, le dipentaerythritol, et le tripentaerythritol ; et les saccharides tels que la cyclodextrine, le D-mannose, le glucose, le galactose, le sucrose, le fructose, le xylose, l'arabinose, le D-mannitol, le D-sorbitol, le D-or L-arabitol, le xylitol, l'iditol, le talitol, l'allitol, l'altritol, le gulitol, l'erythritol, le threitol, et le D-gulonique-y-lactone ;
- une charge de renfort ou de remplissage ; et
- un additif choisit dans le groupe constitué par : les lubrifiants, les agents ignifugeants, les plastifiants, les agents nucléants, les catalyseurs, les antioxydants, les antistatiques, les colorants, les matifiants, les additifs d'aide au moulage.

2. Composition selon la revendication 1, **caractérisée en ce qu'**elle comprend de 5 à 60 % en poids de charges de renfort ou de remplissage, par rapport au poids total de la composition.

3. Composition selon la revendication 1 ou 2, **caractérisée en ce que** l'agent modificateur du choc comprend des groupements fonctionnels réactifs avec le polyamide.

4. Composition selon l'une quelconque des revendications 1 à 3, **caractérisée en ce que** la base élastomérique de l'agent modificateur de choc est choisie dans le groupe constitué par : les polyéthylènes, les polypropylènes, les polybutènes, les polyisoprènes, les caoutchoucs d'éthylène-propylène (EPR), les caoutchoucs d'éthylène-propylène-diène (EPDM), les caoutchoucs d'éthylène et de butène, les caoutchoucs d'éthylène et d'acrylate, les caoutchoucs de butadiène et de styrène, les caoutchoucs de butadiène et d'acrylate, les caoutchoucs d'éthylène et octène, les caoutchoucs butadiène acrylonitrile, les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

5. Composition selon l'une quelconque des revendications 1 à 4, **caractérisée en ce que** l'agent modificateur de choc est choisi dans le groupe constitué par : les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères l'éthylène-propylène-diène greffé par de l'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées.

6. Composition selon l'une quelconque des revendications 1 à 5, **caractérisée en ce que** la composition comprend entre 4 et 8 % d'agent modificateurs du choc, par rapport au poids total de la composition.

7. Composition selon l'une quelconque des revendications 1 à 6, **caractérisée en ce que** l'alcool polyhydrique présente au moins une paire de groupements hydroxyles dont les atomes de carbone auxquels ils sont respectivement liés sont séparés par au moins un atome.

8. Composition selon l'une quelconque des revendications 1 à 7, **caractérisée en ce que** l'alcool polyhydrique est choisi dans le groupe constitué par : le diglycérol, le triglycérol, le pentaérythritol, le dipentaérythritol, le tripentaérythritol, et le di-trimethylolpropane.

## Patentansprüche

1. Zusammensetzung, umfassend mindestens:
- ein thermoplastisches Polyamidharz;
- 3-10 Gew.-%, bezogen auf das Gewicht der Zusammensetzung, Schlagzähigkeitsmodifikatoren;
- ein Wärmestabilisierungssystem, das lediglich aus einem mehrwertigen Alkohol besteht, der aus der Gruppe bestehend aus Diolen, wie 1,5-Pentandiol, 2,2-Dimethyl-1,3-propandiol, Triethylenglykol, Polyglykolethern, Triolen, wie Glycerin, Trimethylolpropan, 2,3-Di-(2'-hydroxyethyl)cyclohexan-1-ol, Hexan-1,2,6-triol, 1,1,1-Tris(hydroxymethyl)ethan, 3-(2'-Hydroxyethoxy)propan-1,2-diol, 3-(2'-Hydroxy-propoxy)propan-1,2-diol, 2-(2'-Hydroxyethoxy)-hexan-1,2-diol, 6-(2'-Hydroxypropoxy)hexan-1,2-diol, 1,1,1-Tris[(2'-hydroxyethoxy)methyl]-ethan, 1,1,1-Tris[(2'-hydroxypropoxy)methyl]-propan, 1,1,1-Tris-(4'-hydroxyphenyl)ethan, 1,1,1-Tris(hydroxyphenyl)propan, 1,1,3-Tris-(dihydroxy-3-methylphenyl)propan, 1,1,4-Tris-(dihydroxyphenyl)butan, 1,1,5-Tris(hydroxyphenyl)-3-methylpentan, Ditrimethylolpropan, Trimethylolpropanethoxylat oder Trimethylolpropanpropoxylat; Polyolen, wie Pentaerythritol, Dipentaerythritol und Tripentaerythritol; und Sacchariden, wie Cyclodextrin, D-Mannose, Glucose, Galactose, Saccharose, Fructose, Xylose, Arabinose, D-Mannitol, D-Sorbitol, D- oder L-Arabitol, Xylitol, Iditol, Talitol, Allitol, Altritol, Gulitol, Erythritol, Threitol und D-Gulonsäure-γ-lacton ausgewählt ist;
- einen verstärkenden oder streckenden Füllstoff; und
- ein Additiv aus der Gruppe bestehend aus Schmiermitteln, Flammschutzmitteln, Weichmachern, Nukleierungsmittel, Katalysatoren, Antioxidantien, Antistatika, Farbmitteln, Mattierungsmitteln und Formgebungshilfsmitteln.

2. Zusammensetzung nach Anspruch 1 gekennzeichnet, dass sie 5 bis 60 Gew.-% verstärkende oder sreckende Füllstoffe, bezogen auf das Gesamtgewicht der Zusammensetzung, umfasst.

3. Zusammensetzung nach Anspruch 1 oder 2, **dadurch gekennzeichnet, dass** der Schlagzähigkeitsmodifikator gegenüber dem Polyamid reaktive funktionelle Gruppen umfasst.

4. Zusammensetzung nach einem der Ansprüche 1 bis 3, **dadurch gekennzeichnet, dass** die Elastomerbasis des Schlagzähigkeitsmodifikators aus der Gruppe bestehend aus Polyethylenen, Polypropylenen, Polybutenen, Polyisoprenen, Ethylen-Propylen-Kautschuken (EPR), Ethylen-Propylen-Dien(EPDM)-Kautschuken, Ethylen-Buten-Kautschuken, Ethylen-Acrylat-Kautschuken, Butadien-Styrol-Kautschuken, Butadien-Acrylat-Kautschuken, Ethylen-Octen-Kautschuken, Butadien-Acrylonitril-Kautschuken, Ethylen/Acrylsäure(EAA)-Produkten, Ethylen/Vinylacetat(EVA)-Produkten, Ethylen/Acrylsäureester(EEA)-Produkten, Acrylonitril/Butadien/Styrol(ABS)-Copolymeren, Styrol/Ethylen/Butadien/Styrol(SEBS)-Blockcopolymeren, Styrol/Butadien/Styrol(SBS)-Copolymeren, Kern-Schale-Elastomeren vom Methacrylat/Butadien/Styrol(MBS)-Typ oder Mischungen von mindestens zwei oben aufgeführten Elastomeren ausgewählt ist.

5. Zusammensetzung nach einem der Ansprüche 1 bis 4, **dadurch gekennzeichnet, dass** der Schlagzähigkeitsmodifikator aus der Gruppe bestehend aus Terpolymeren von Ethylen, Acrylsäureester und Glycidylmethacrylat, Copolymeren von Ethylen und Butylesteracrylat, Copolymeren von Ethylen, n-Butylacrylat und Glycidylmethacrylat, Copolymeren von Ethylen und Maleinsäureanhydrid, Ethylen-Propylen-Dien-Copolymeren, die mit Maleinsäureanhydrid gepfropft sind, Styrol-Maleinimid-Copolymere, die mit Maleinsäureanhydrid gepfropft sind, Styrol-Ethylen-Butylen-StyrolCopolymere, die mit Maleinsäureanhydrid modifiziert sind, Styrol-Acrylnitril-Copolymere, die mit Maleinsäureanhydriden gepfropft sind, Acrylonitril-Butadien-Styrol-Copolymeren, die mit Maleinsäureanhydrid gepfropft sind, und hydrierten Versionen davon ausgewählt ist.

6. Zusammensetzung nach einem der Ansprüche 1 bis 5, **dadurch gekennzeichnet, dass** die Zusammensetzung zwischen 4 und 8 % Schlagzähigkeitsmodifikatoren, bezogen auf das Gesamtgewicht der Zusammensetzung, umfasst.

7. Zusammensetzung nach einem der Ansprüche 1 bis 6, **dadurch gekennzeichnet, dass** der mehrwertige Alkohol mindestens ein Paar von Hydroxylgruppen, deren Kohlenstoffatome jeweils durch mindestens ein Atom getrennt sind, aufweist.

8. Zusammensetzung nach einem der Ansprüche 1 bis 7, **dadurch gekennzeichnet, dass** der mehrwertige Alkohol aus der Gruppe bestehend aus Diglycerin, Triglycerin, Pentaerythritol, Dipentaerythritol, Tripentaerythritol und Ditrimethylolpropan ausgewählt ist.

## Claims

1. Composition comprising at least:
- one thermoplastic polyamide resin;
- from 3-10 % by weight, relative to the total weight of the composition, of impact modifiers;
- heat stabilization system consisting solely of a polyhydric alcohol selected from the group consisting of: diols, such as 1,5-pentanediol, 2,2-dimethyl-1,3 propanediol, triethylene glycol, poly(glycol ether)s, triols, for instance glycerol, trimethylolpropane, 2,3-di-(2'-hydroxyethyl)cyclohexan-1-ol, hexane-1,2,6-triol, 1,1,1-tris-(hydroxymethyl)ethane, 3-(2'-hydroxyethoxy)propane-1,2-diol, 3-(2'-hydroxypropoxy)propane-1,2-diol, 2-(2'-hydroxyethoxy)hexane-1,2-diol, 6-(2'-hydroxypropoxy)hexane-1,2-diol, 1,1,1-tris-[(2'-hydroxyethoxy)methyl]ethane, 1,1,1-tris-[(2'-hydroxypropoxy)methyl]propane, 1,1,1-tris-(4'-hydroxyphenyl)ethane, 1,1,1-tris-(hydroxyphenyl)propane, 1,1,3-tris-(dihydroxy-3-methylphenyl)propane, 1,1,4-tris-(dihydroxyphenyl)butane, 1,1,5-tris-(hydroxyphenyl)-3-methylpentane, di-trimethylopropane, trimethylolpropane ethoxylate, or trimethylolpropane propoxylate; polyols, such as pentaerythritol, dipentaerythritol, and tripentaerythritol; and saccharides such as cyclodextrin, D-mannose, glucose, galactose, sucrose, fructose, xylose, arabinose, D-mannitol, D-sorbitol, D- or L-arabitol, xylitol, iditol, talitol, allitol, altritol, gulitol, erythritol, threitol and D-gulonic-γ-lactone,
- one reinforcing or bulking filler; and
- one additive selected from the group consisting of: lubricants, flame retardants, plasticizers, nucleating agents, catalysts, antioxidants, antistatic agents, colorants, mattifying agents and molding aids.

2. Composition according to Claim 1, **characterized in that** it comprises from 5% to 60% by weight of reinforcing or bulking fillers, relative to the total weight of the composition.

3. Composition according to Claim 1 or 2, **characterized in that** the impact modifier comprises functional groups which react with the polyamide.

4. Composition according to any one of Claims 1 to 3, **characterized in that** the elastomer base of the impact modifier is selected from the group consisting of: polyethylenes, polypropylenes, polybutenes, polyisoprenes, ethylene/propylene rubbers (EPR), ethylene/propylene/diene (EPDM) rubbers, ethylene and butene rubbers, ethylene and acrylate rubbers, butadiene and styrene rubbers, butadiene and acrylate rubbers, ethylene and octene rubbers, butadiene and acrylonitrile rubbers, ethylene/acrylic acid (EAA) products, ethylene/vinyl acetate (EVA) products, ethylene/acrylic ester (EAE) products, acrylonitrile/butadiene/styrene (ABS) copolymers, styrene/ethylene/butadiene/styrene block (SEBS) copolymers, styrene/butadiene/styrene (SBS) copolymers, core/shell elastomers of methacrylate/butadiene/styrene (MBS) type, or blends of at least two elastomers listed above.

5. Composition according to any one of Claims 1 to 4, **characterized in that** the impact modifier is selected from the group consisting of: terpolymers of ethylene, acrylic ester and glycidyl methacrylate, copolymers of ethylene and of butyl ester acrylate, copolymers of ethylene, n-butyl acrylate and glycidyl methacrylate, copolymers of ethylene and of maleic anhydride, ethylene/propylene/diene copolymers grafted with maleic anhydride, styrene/maleimide copolymers grafted with maleic anhydride, styrene/ethylene/butylene/styrene copolymers modified with maleic anhydride, styrene/acrylonitrile copolymers grafted with maleic anhydrides, acrylonitrile/butadiene/styrene copolymers grafted with maleic anhydrides, and hydrogenated versions thereof.

6. Composition according to any one of Claims 1 to 5, **characterized in that** the composition comprises between 4% and 8% of impact modifiers, relative to the total weight of the composition.

7. Composition according to any one of Claims 1 to 6, **characterized in that** the polyhydric alcohol has at least one pair of hydroxyl groups of which the carbon atoms to which they are respectively bonded are separated by at least one atom.

8. Composition according to any one of Claims 1 to 7, **characterized in that** the polyhydric alcohol is selected from the group consisting of: diglycerol, triglycerol, pentaerythritol, dipentaerythritol, tripentaerythritol and di-trimethylolpropane.
